# EUROPEAN PATENT SPECIFICATION

(11) **EP 3 546 184 B1**
(45) Date of publication and mention of the grant of the patent: **04.11.2020**
(21) Application number: 19164214.9
(22) Date of filing: 21.03.2019
(51) Int. Cl.: B29C 45/76

(54) **INJECTION MOLDING DATA MANAGEMENT DEVICE AND INJECTION MOLDING MACHINE**
SPRITZGIESSDATENVERWALTUNGSVORRICHTUNG UND SPRITZGIESSMASCHINE
DISPOSITIF DE GESTION DE DONNÉES DE MOULAGE PAR INJECTION ET MACHINE DE MOULAGE PAR INJECTION

(30) Priority: 30.03.2018 JP 2018066983
(43) Date of publication of application: 02.10.2019
(73) Proprietor: Sumitomo Heavy Industries, Ltd., Tokyo 141-6025 (JP)
(72) Inventor: HANO, Katsunobu, Chiba-shi, Chiba, 263-0001, (JP)
(74) Representative: Louis Pöhlau Lohrentz

(56) References cited:
- EP-A1- 1 614 522
- US-A1- 2004 093 114
- US-A1- 2016 200 021
- US-B1- 6 258 303

## Description

### BACKGROUND OF THE INVENTION

### Field of the Invention

Present invention relates to an injection molding data management device and an injection molding machine.

### Description of Related Art

An injection molding machine described in Japanese Unexamined Patent Publication No. 2002-307508 includes a control unit, and a detection value from each sensor provided in the injection molding machine is input to the control unit as actual data for each cycle (shot) and is stored in the control unit. For example, the actual data stored for each cycle includes a filling time, a plasticizing time, a cushion position of a screw, a holding pressure completion position of a screw, a V/P switching position of a screw, a filling peak pressure, or the like. The actual data is used for quality management of a molding product .US Patent Application US 2004/093114 A1 discloses a control system for controlling the operation of a molding machine. European Patent Application EP 1 614 522 A1 discloses a monitoring device for an injection molding machine. US Patent Application US 2016/200021 A1 discloses a compression controller of an injection molding machine. US Patent Application US 6 258 303 B1 discloses a monitoring apparatus for monitoring an operating condition of an injection molding machine which includes a display displaying waveforms of operating parameters of the machine, such that each waveform represents a chronological change of a value of the corresponding parameter.

### SUMMARY OF THE INVENTION

In the related art, only a detection value at a preset specific time is recorded as actual data during molding of a molding product. For this reason, a detection timing of the actual data used for a quality management of the molding product cannot be changed after the molding product is molded.

A main object of an aspect of an embodiment is to enable a detection timing of actual data used for a quality management of a molding product to be changeable after the molding product is molded.

According to an aspect of an embodiment, there is provided an injection molding data management device including: a data storage unit which stores data indicating a time-dependent change of a detection value detected by a detector in an injection molding machine, the data being stored in association with a reference timing for determining an extraction timing at which the detection value is extracted from the data; and a detection value extraction unit which compares an extraction timing which is input to an input unit and the reference timing with each other and extracts a detection value detected at the extraction timing input to the input unit from the data stored in the data storage unit.

According to the aspect of the embodiment, it is possible to change the detection timing of the actual data used for the quality management of the molding product after the molding product is molded.

### BRIEF DESCRIPTION OF THE DRAWINGS

Fig. 1 is a diagram showing a state when a mold opening of an injection molding machine according to an embodiment is completed.
Fig. 2 is a diagram showing a state when a mold of the injection molding machine according to the embodiment is clamped.
Fig. 3 is a functional block diagram showing components of a control unit which is an injection molding data management device and components of a host computer according to an embodiment.
Fig. 4 is a graph showing a relationship between time-dependent change data and a reference timing stored in a data storage unit in the injection molding machine according to the embodiment.
Fig. 5 is a table showing a relationship between the time-dependent change data and the reference timing stored in the data storage unit in the injection molding machine according to the embodiment.
Fig. 6 is a diagram showing a first example of an input screen displayed on an input unit in the injection molding machine according to the embodiment.
Fig. 7 is a table showing an extraction timing, a detection item to which the extraction timing is set, and a relationship between time-dependent change data of the detection item and the reference timing, which are respectively input to the input screen of Fig. 6.
Fig. 8 is a diagram showing a second example of the input screen displayed on the input unit in the injection molding machine according to the embodiment.
Fig. 9 is a table showing an extraction timing, a detection item to which the extraction timing is set, and a relationship between time-dependent change data of the detection item and the reference timing, which are respectively input to the input screen of Fig. 8.
Fig. 10 is a diagram showing a relationship between a host computer and a control unit mounted on each of a plurality of injection molding machines in the injection molding machine according to the embodiment.

### DETAILED DESCRIPTION OF THE INVENTION

Hereinafter, embodiments of the present invention will be described with reference to the drawings. In each drawing, the same or corresponding reference numerals are assigned to the same or corresponding configurations, and descriptions thereof are omitted.

### (Injection Molding Machine)

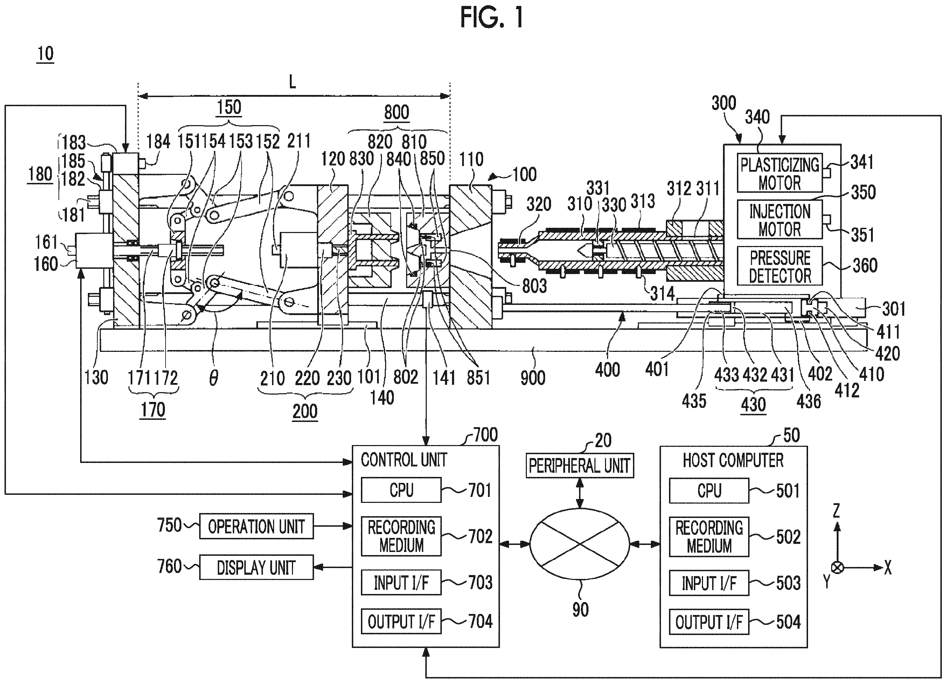

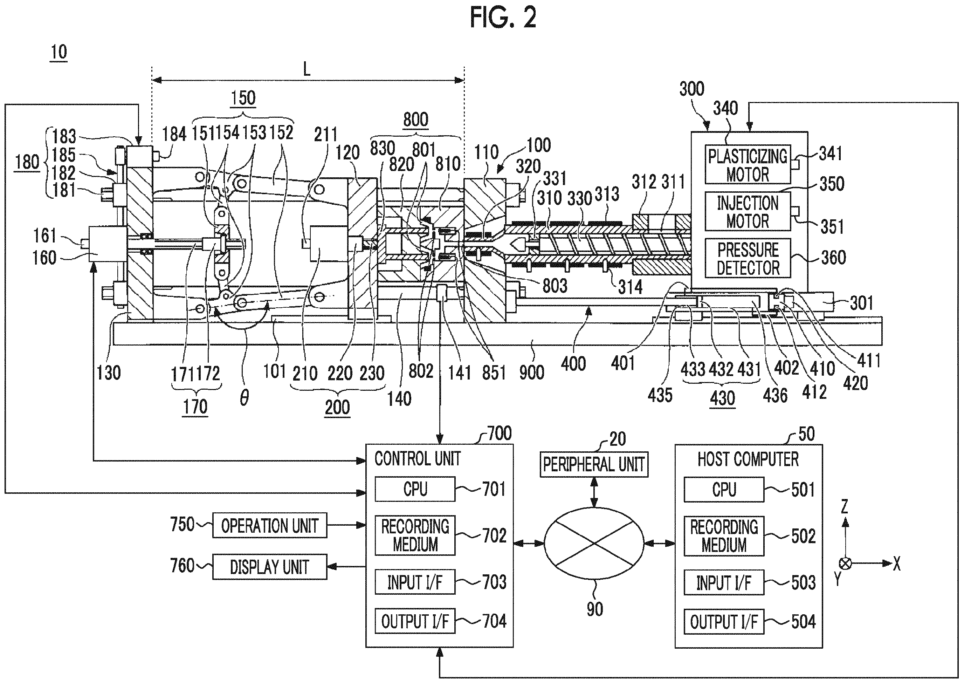

Fig. 1 is a diagram showing a state when a mold opening of an injection molding machine according to an embodiment is completed. Fig. 2 is a diagram showing a state when a mold of the injection molding machine according to the embodiment is clamped. In Figs. 1 and 2, an X direction, a Y direction, and a Z direction are directions perpendicular to each other. The X direction and the Y direction indicate a horizontal direction, and the Z direction indicates a vertical direction. In a case where a mold clamping unit 100 is a horizontal type mold clamping unit, the X direction is mold opening and closing directions, and the Y direction is a width direction of an injection molding machine 10. As shown in Figs. 1 and 2, the injection molding machines 10 includes the mold clamping unit 100, an ejector unit 200, an injection unit 300, a movement unit 400, a control unit 700, and a frame 900. Hereinafter, each component of the injection molding machine 10 will be described.

### (Mold Clamping Unit)

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 800. For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. A stationary mold 810 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 820 is attached to a surface of the movable platen 120 facing the stationary platen 110.

The movable platen 120 moves forward or rearward with respect to the stationary platen 110, and thus, closing, clamping, and opening of the mold are performed. The mold unit 800 includes the stationary mold 810 and the movable mold 820.

The toggle support 130 is connected so as to be separated from the stationary platen 110, and is placed on the frame 900 to be movable in mold opening and closing directions . In addition, the toggle support 130 may be movable along a guide which is placed on the frame 900. The guide of the toggle support 130 may be also used as the guide 101 of the movable platen 120.

In addition, in the present embodiment, the stationary platen 110 is fixed to the frame 900, and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The stationary platen 110 and the toggle support 130 are connected to each other with a gap L in the mold opening and closing directions by the tie bar 140. Aplurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the control unit 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a pressurization process, a depressurization process, a mold opening process, or the like under the control of the control unit 700.

In the mold closing process, the mold clamping motor 160 is driven to move the crosshead 151 forward to a mold closing completion position at a set movement speed. Accordingly, the movable platen 120 moves forward and the movable mold 820 comes into contact with the stationary mold 810. For example, a position or movement speed of the crosshead 151 is detected using a mold clamping motor encoder 161 or the like. The mold clamping motor encoder 161 detects the rotation of the mold clamping motor 160 and sends a signal indicating the detection result to the control unit 700. In addition, a crosshead position detector which detects the position of the crosshead 151 and a crosshead speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used. During the mold closing process, the crosshead 151 may be temporarily stopped such that the movable platen 120 is temporarily stopped. An insert material can be installed in the movable mold 820 or the stationary mold 810 in a state where the movable mold 820 is temporarily stopped.

In the pressurization process, the mold clamping motor 160 is further driven to further move the crosshead 151 forward from the mold closing completion position to a mold clamping position, and thus, a mold clamping force is generated. When the mold is clamped, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained. One cavity space 801 may be provided. However, as shown in Fig. 2, a plurality of cavity spaces 801 may be provided. In the latter case, a plurality of molding products can be simultaneously obtained. The insert material may be disposed in a portion of the cavity space 801 and another portion of the cavity space 801 may be filled with the molding material. A molding product in which the insert material and the molding material are integrated with each other is obtained.

In the depressurization process, the mold clamping motor 160 is driven to move the crosshead 151 rearward from the mold clamping start position to a mold opening completion position, and thus, the movable platen 120 is moved rearward and the mold clamping force decreases. The mold opening start position and the mold closing completion position may be the same as each other.

In the mold opening process, the mold clamping motor 160 is driven to move the crosshead 151 rearward from the mold opening start position to a mold opening completion position at a set movement speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process and the pressurization process are collectively set as a series of setting conditions. For example, the movement speed or positions (including mold closing start position, movement speed switching position, mold opening/closing completion position, and mold clamping position) of the crosshead 151 and the mold clamping force in the mold closing process and the pressurization process are collectively set as a series of setting conditions. The mold opening/closing start position, the movement speed switching position, the mold closing completion position, and the mold clamping position are arranged in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the depressurization process and the mold opening process. For example, the movement speed or positions (including mold opening start position, movement speed switching position, and mold opening completion position) of the crosshead 151 in the depressurization process and the mold opening process are collectively set as a series of setting conditions. The mold opening start position, the movement speed switching position, and the mold opening completion position are arranged in this order from the front side to the rear side and indicate start points and end points of sections where the movement speed is set. The movement speed is set for each section. The movement speed switching position may be one or more. The movement speed switching position may not be set. The mold opening start position and the mold closing completion position may be the same as each other. In addition, the mold opening completion position and the mold opening/closing start position may be the same as each other.

In addition, instead of the movement speed, the positions, or the like of the crosshead 151, a movement speed, positions, or the like of the movable platen 120 maybe set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotational driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotational driving force transmission portion 185 may include a belt, a pulley, or the like instead of the gear.

An operation of the mold space adjustment mechanism 180 is controlled by the control unit 700. The control unit 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

The gap L is detected using a mold space adjustment motor encoder 184. The mold space adjustment motor encoder 184 detects a rotation amount or a rotation direction of the mold space adjustment motor 183 and sends a signal indicating a detection result to the control unit 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In the mold space adjustment mechanism 180, the gap L is adjusted by rotating one of the screw shaft 181 and the screw nut 182 which are screwed to each other. A plurality of the mold space adjustment mechanisms 180 may be used, and a plurality of the mold space adjustment motors 183 may be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is opened is defined as the rear side.

The ejector unit 200 ejects the molding product from the mold unit 800. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 830 which is disposed to be movable forward or rearward inside the movable mold 820. The front end portion of the ejector rod 230 may be connected to the movable member 830 or may not be connected to the movable member 830.

The ejector unit 200 performs an ejection process under the control of the control unit 700.

In the ejection process, the ejector motor 210 is driven to move the ejector rod 230 forward from a standby position to an ejection position at a set movement speed, and thus, the movable member 830 moves forward and the molding product is ejected. Thereafter, the ejector motor 210 is driven to move the ejector rod 230 rearward at a set movement speed, and thus, the movable member 830 moves rearward to an original standby position. For example, a position or movement speed of the ejector rod 230 is detected using an ejector motor encoder 211. The ejector motor encoder 211 detects the rotation of the ejector motor 210 and sends a signal indicating a detection result to the control unit 700. In addition, an ejector rod position detector which detects the position of the ejector rod 230 and an ejector rod movement speed detector which detects the movement speed of the ejector rod 230 are not limited to the ejector motor encoder 211, and a general detector can be used.

### (Injection Unit)

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame 900, and is movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed into pellets and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The control unit 700 controls the heating unit 313 such that a detection temperature of the temperature detector 314 becomes a set temperature for each zone.

The nozzle 320 is provided on the front end portion of the cylinder 310 and presses the mold unit 800. The heating unit 313 and the temperature detector 314 are provided on an outer periphery of the nozzle 320. The control unit 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 800 is filled with the liquid molding material.

A back flow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 maybe either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example.

The pressure detector 360 detects a force transmitted between the injection motor 350 and the screw 330. The detected force is converted into a pressure by the control unit 700. The pressure detector 360 is provided on a transmission path of the force between the injection motor 350 and the screw 330 and detects a force applied to the pressure detector 360.

The pressure detector 360 sends a signal indicating a detection result to the control unit 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a filling process, a holding pressure process, a plasticizing process, or the like under the control of the control unit 700.

In the plasticizing process, the plasticizing motor 340 is driven to rotate the screw 330 at a set rotational speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotational speed of the screw 330 is detected using a plasticizing motor encoder 341. The plasticizing motor encoder 341 detects the rotation of the plasticizing motor 340 and sends a signal indicating a detection result to the control unit 700. In addition, a screw rotational speed detector which detects the rotational speed of the screw 330 is not limited to the plasticizing motor encoder 341, and a general detector may be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the control unit 700. If the screw 330 moves rearward to a plasticizing completion position and a predetermined amount of the molding materials is accumulated in front of the screw 330, the plasticizing process is completed.

The positions and the rotational speeds of the screw 330 in the plasticizing process are collectively set as a series of setting conditions. For example, a plasticizing start position, a rotational speed switching position, and the plasticizing completion position are set. The positions are arranged in this order from the front side toward the rear side and indicate start points or end points of the sections where the rotational speed is set. The rotational speed is set for each section. The rotational speed switching position may be one or more. The rotational speed switching position may not be set. Moreover, a back pressure is set for section.

In the filling process, the injection motor 350 is driven to move the screw 330 forward at a set speed, and the cavity space 801 inside the mold unit 800 is filled with the liquid molding material accumulated in front of the screw 330. For example, a position or speed of the screw 330 is detected using an injection motor encoder 351. The injection motor encoder 351 detects the rotation of the injection motor 350 and sends a signal indicating a detection result to the control unit 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

The positions and the movement speeds of the screw 330 in the filling process are collectively set as a series of setting conditions. For example, a filling start position, a movement speed switching position, and the V/P switching position are set. The positions are arranged in this order from the rear side toward the front side and indicate start points or end points of the sections where the movement speed is set. The movement speed is set for each section. The movement speed switching position may be one or more. The movement speed switching position may not be set.

An upper limit value of a pressure of the screw 330 is set for each section in which the movement speed of the screw 330 is set. The pressure of the screw 330 is detected by the pressure detector 360. In a case where a detection value of the pressure detector 360 is equal to or less than a set pressure, the screw 330 moves forward at a set movement speed. Meanwhile, in a case where the detection value of the pressure detector 360 exceeds the set pressure, in order to protect the mold, the screw 330 moves forward at a movement speed slower than the set movement speed such that the detection value of the pressure detector 360 is equal to or less than the set pressure.

Moreover, in the filling process, after the position of the screw 330 reaches the V/P switching position, the screw 330 may temporarily stop at the V/P switching position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In addition, when the control unit 700 receives a V/P switching signal from an external computer, the control unit 700 may perform the V/P switching. For example, the external computer is connected to a flow front end position detector 840 (refer to Fig. 1) which detects a flow front end position of the molding material filling the inside of the mold unit 800. For example, as the flow front end position detector 840, a pressure detector which detects the pressure of the molding material is used. If a flow front end of the molding material reaches an installation position of the pressure detector, a detection value of the pressure detector increase. If the external computer detects that the flow front end of the molding material reaches a preset position by the flow front end position detector 840, the external computer transmits the V/P switching signal to the control unit 700.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the control unit 700. A set value of the holding pressure may be changed according to an elapsed time from the starting of the holding pressure process, or the like. A plurality of holding pressures and a plurality of holding times holding the holding pressures may be set in the holding pressure process and are collectively set as a series of setting conditions .

In the holding pressure process, the molding material inside the cavity space 801 in the mold unit 800 is gradually cooled, and when the holding pressure process is completed, an inlet (hereinafter, also referred to as a "gate") 802 of the cavity space 801 is closed by a gate valve 850 (refer to Fig. 1). The gate valve 850 includes a valve pin 851 which moves between a closed position (refer to Fig. 1) at which the valve pin 851 is inserted into the gate 802 and an open position (refer to Fig. 2) at which the valve pin 851 is taken out from the gate 802. When the holding pressure process is completed, the gate 802 which is an inlet of the cavity space 801 is closed, and thus, the molding material is prevented from flowing rearward from the cavity space 801. A cooling process starts after the holding pressure process. In the cooling process, solidification of the molding material in the cavity space 801 is performed. In order to shorten a molding cycle time, the plasticizing process may be performed during the cooling process.

Moreover, the mold unit 800 of the present embodiment is a hot runner type mold unit which heats a flow path from a molding material inlet 803 coming into contact with the nozzle 320 of the injection unit 300 to the gate 802 in order to prevent the solidification of the molding material in the flow path. However, the mold unit 800 may be a cold runner type mold unit which does not heat the flow path. In a case of the cold runner type mold unit 800, the gate valve 850 is not necessary, and when the holding pressure process is completed, the inlet of the cavity space 801 is closed by the solidified molding material instead of the valve pin 851. This state is referred to as a gate seal, and a backflow of the molding material from the cavity space 801 is prevented.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during the plasticizing is referred to as a rear side.

The movement unit 400 moves the injection unit 300 forward or rearward with respect to the mold unit 800. In addition, the movement unit 400 presses the nozzle 320 to the mold unit 800 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the control unit 700 and by the rotation torque corresponding to the control signal from the control unit 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which is a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Control unit)

For example, the control unit 700 includes a computer, and as shown in Figs. 1 and 2, the control unit 700 includes a Central Processing Unit (CPU) 701, a recording medium 702 such as a memory, an input interface 703, and an output interface 704. The control unit 700 performs various controls by causing the CPU 701 to execute a program stored in the recording medium 702. In addition, the control unit 700 receives a signal from the outside through the input interface 703 and transmits a signal to the outside through the output interface 704.

The control unit 700 repeatedly performs the plasticizing process, the mold closing process, the pressurization process, the filling process, the holding pressure process, the cooling process, the depressurization process, the mold opening process, the ejection process, or the like to repeatedly manufacture the molding product. A series of operations to obtain the molding product, for example, an operation from the start of the plasticizing process to the start of the next plasticizing process is also referred to as a "shot" or a "molding cycle". In addition, a time required for once shot is also referred to as a "molding cycle time" or a "cycle time".

For example, the once molding cycle includes the plasticizing process, the mold closing process, the pressurization process, the filling process, the holding pressure process, the cooling process, the depressurization process, the mold opening process, and the ejection process in this order. Here, this order is an order of the start of each process. In the filling process, the holding pressure process, and the cooling process are performed between the start of the pressurization process to the end of the depressurization process. The end of the depressurization process coincides with the start of the mold opening process.

In addition, in order to shorten the molding cycle time, the plurality of processes may be simultaneously performed. For example, the plasticizing process may be performed during the cooling process of the previous molding cycle or may be performed from the start of the pressurization process to the end of the depressurization process. Inthiscase, the mold closing process may be performed at an initial stage of the molding cycle. In addition, the filling process may be started during the mold closing process. Moreover, the ejection process may be started during the mold opening process. In a case where an on/off valve which opens and closes the flow path of the nozzle 320 is provided, the mold opening process may be started during the plasticizing process. Accordingly, even when the mold opening process starts during the plasticizing process, if the on/off valve closes the flow path of the nozzle 320, the molding material does not leak from the nozzle 320.

Moreover, the once molding cycle may include a process other than the plasticizing process, the mold closing process, the pressurization process, the filling process, the holding pressure process, the cooling process, the depressurization process, the mold opening process, and the ejection process. For example, before the plasticizing process starts after the holding pressure process is completed, a pre-plasticizing suck-back process in which the screw 330 moves rearward to the plasticizing start position set in advance may be performed. Accordingly, it is possible to decrease the pressure of the molding material accumulated in front of the screw 330 before the plasticizing process starts and it is possible to prevent the screw 330 from abruptly moving rearward when the plasticizing process starts.

The control unit 700 is connected to an operation unit 750 or the display unit 760. The operation unit 750 receives an input operation from a user and outputs a signal corresponding to the input operation to the control unit 700. The display unit 760 displays the display screen corresponding to the input operation of the operation unit 750 under the control of the control unit 700.

The display screen is used for the setting of the injection molding machine 10 or the like. A plurality of display screens are provided, and thus, are displayed to be switched or to overlap each other. The user operates the operation unit 750 while viewing the display screen displayed on the display unit 760 to perform the setting (including an input of a set value) of the injection molding machine 10 or the like.

For example, the operation unit 750 and the display unit 760 may be configured of a touch panel to be integrated with each other. Inaddition, in the present embodiment, the operation unit 750 and the display unit 760 are integrated with each other. However, the operation unit 750 and the display unit 760 may be independently provided. In addition, a plurality of operation units 750 may be provided.

### (Injection Molding Data Management Device)

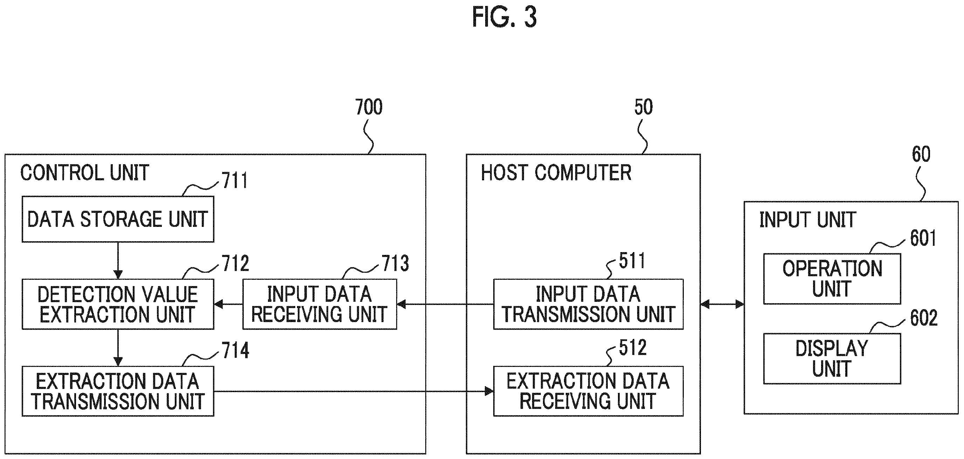

Fig. 3 is a functional block diagram showing components of a control unit which is an injection molding data management device and components of a host computer according to an embodiment. Each functional block shown in Fig. 3 is conceptual and do not necessarily have to be physically configured as shown. It is possible to configure all or a part of the functional blocks by functionally or physically dispersing and integrating the functional blocks in a predetermined unit. All or a portion of processing functions performed in each functional block can be realized by a program executed by the CPU or can be realized as hardware by wired logic.

As shown in Fig. 3, the control unit 700 includes a data storage unit 711 which stores data (hereinafter, also referred to as "time-dependent change data") indicating a time-dependent change of the detection value detected by the detector in the injection molding machine 10. For example, the time-dependent change data is acquired during the molding cycle and is stored. The time-dependent change data may be waveform data. In the data storage unit 711, the time-dependent change data is stored in association with a reference timing for determining an extraction timing at which the detection value is extracted from the time-dependent change data. Since the time-dependent change data is stored in association with the reference timing, a detection timing of actual data used in a quality management of the molding product can be changed after the molding product is molded.

In the data storage unit 711, the time-dependent change data is stored in association with the reference timing for each shot. For example, in the data storage unit 711, the time-dependent change data is stored in association with the reference timing and a shot number. The detection value at a desired timing can be extracted from the time-dependent change data having a specific shot number.

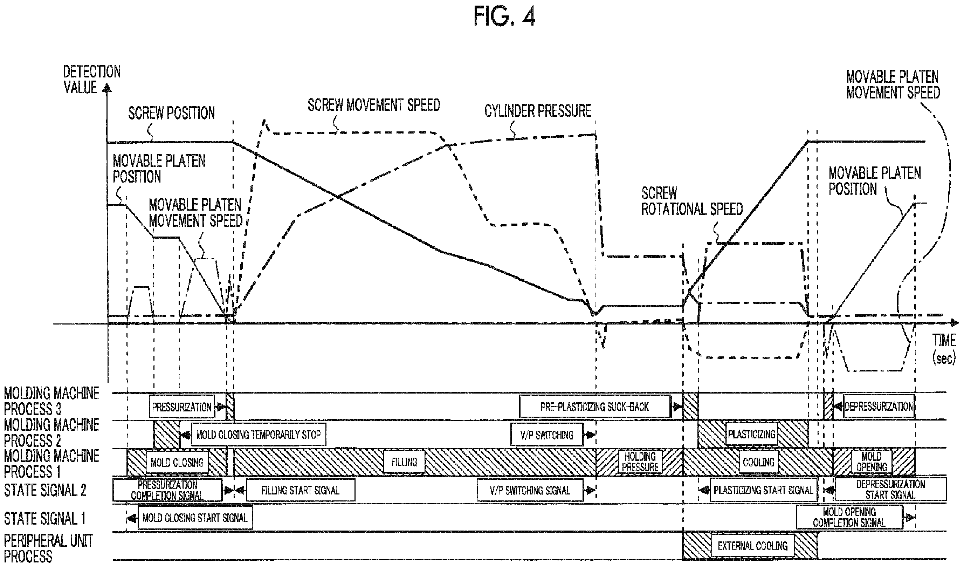

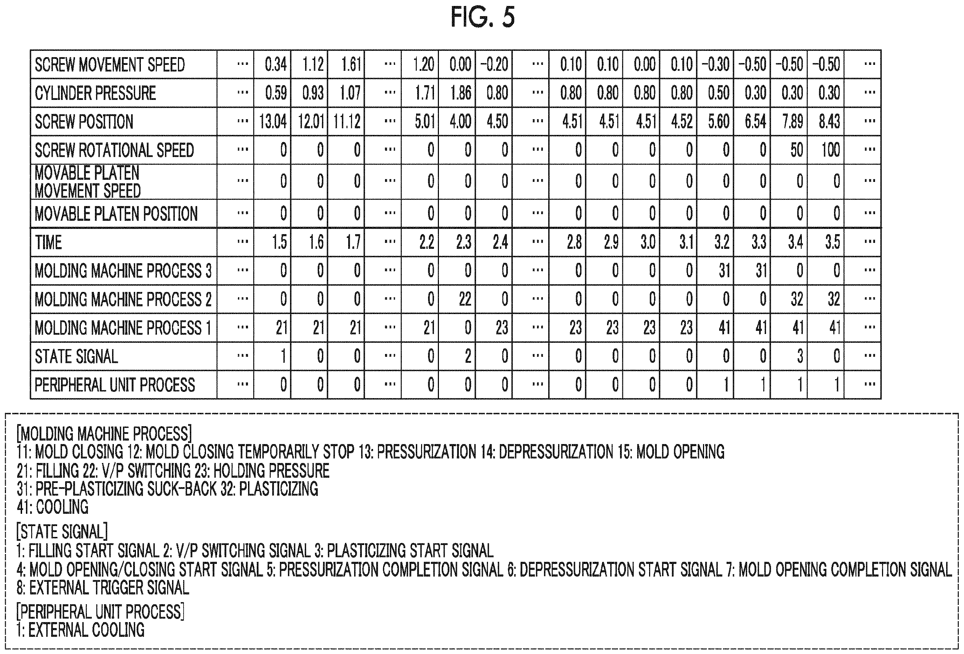

Fig. 4 is a graph showing a relationship between the time-dependent change data and the reference timing stored in the data storage unit in the injection molding machine according to the embodiment. Fig. 5 is a table showing a relationship between the time-dependent change data and the reference timing stored in the data storage unit in the injection molding machine according to the embodiment. In Figs. 4 and 5, since a molding machine process which is the reference timing and a molding machine process which is another reference timing overlap each other in time, a plurality of fields of the molding machine process are provided for the sake of convenience. In the present specification, the molding machine process is a process performed under the control of the control unit 700 mounted on the injection molding machine 10, and is a process performed during one shot. In addition, in Fig. 4, for the sake of convenience, a plurality of fields of state signals which are reference timings are provided.

In the data storage unit 711, the time-dependent change data of one detection item may be stored for each shot, but the time-dependent change data of each of a plurality of detection items may be stored. For example, in the data storage unit 711, for each shot, the time-dependent change data of the screw position, the time-dependent change data of the screw movement speed, the time-dependent change data of the screw rotational speed, the time-dependent change data of the pressure in the cylinder, the time-dependent change data of the movable platen position, and the time-dependent change data of the movable platen movement speed are stored.

For example, as the screw position detector and the screw movement speed detector, the injection motor encoder 351 is used. For example, as the screw rotational speed detector, the plasticizing motor encoder 341 is used. For example, as the cylinder pressure detector, the pressure detector 360 is used. For example, as the movable platen position detector and the movable platen movement speed detector, the mold clamping motor encoder 161 is used.

For example, the reference timing includes an operation timing of the injection molding machine 10 during acquisition of the time-dependent change data (for example, during one molding cycle). The operation timing of the injection molding machine 10 is controlled by the control unit 700. In the data storage unit 711, the time-dependent change data is stored in association with the operation timing of the injection molding machine 10 during the acquisition of the time-dependent change data. The detection value can be extracted based on the operation timing of the injection molding machine 10 and by analyzing the extracted detection value, the analyzed detection value can be useful for changing setting of the injection molding machine 10.

For example, the operation timing of the injection molding machine 10 is the molding machine process performed under the control of the control unit 700 . Examples of the molding machine process include, but are not limited to, the mold closing process, a mold closing temporarily stopping process, the pressurization process, the depressurization process, the mold opening process, the filling process, the holding pressure process, the pre-plasticizing suck-back process, the plasticizing process, and the cooling process. A start timing and an end timing of each of the processes are stored in the data storage unit 711 in association with the time-dependent change data. The V/P switching, which divides the process into the filling process and the holding pressure process, is also one of the molding machine processes.

The operation timing of the injection molding machine 10 may be a state signal which determines the state of the injection molding machine 10. For example, examples of the state signal include a filling start signal, the V/P switching signal, a plasticizing start signal, a mold closing start signal, a pressurization completion signal, a depressurization start signal, a mold opening completion signal, or the like. The signals are created by the detector in the injection molding machine 10 at the start timing or the end timing of the molding machine process. The created timing is the operation timing. In addition, the state signal includes an external trigger signal.

The external trigger signal is a signal for a peripheral unit of the injection molding machine 10 to start a predetermined molding machine process in the control unit 700. If the control unit 700 receives the external trigger signal, the control unit 700 starts a predetermined molding machine process at a received timing. A timing when the control unit receives the external trigger signal is the operation timing. Examples of the peripheral unit of the injection molding machine 10 include the flow front end position detector 840, the gate valve 850, or the like.

If the flow front end position detector 840 detects that the flow front end of the molding material has reached a preset position, the flow front end position detector 840 transmits the V/P switching signal to the control unit 700. The control unit receives the V/P switching signal, the control unit 700 starts the holding pressure process at the received timing. The V/P switching can be reliably performed before the flow front end of the molding material reaches an end of the cavity space 801, and it is possible to suppress overshoot in the pressure of the molding material generated by collision of the molding material against an end wall.

After the gate valve opens the gate 802, the gate valve 850 transmits the filling start signal to the control unit 700. If the control unit 700 receives the filling start signal, the control unit 700 starts the filling process at the received timing. If the filling process starts, the molding material flows from the molding material inlet 803 toward the cavity space 801. The gate 802 during the flowing of the molding material is opened before the filling process starts, and thus, the molding material does not get stuck in the middle thereof, and the pressure of the molding material does not increase abnormally.

After the gate valve 850 closes the gate 802, the gate valve 850 transmits the plasticizing start signal to the control unit 700. If the control unit receives the plasticizing start signal, the control unit 700 starts the plasticizing process at the received timing. If the plasticizing process starts, molding material is accumulated in the front of the cylinder 310. In this case, since the screw 330 moves rearward inside the cylinder 310, the molding material may flow rearward from the inside of the mold unit 800 toward the inside of the cylinder 310. Even if the backflow occurs, since the gate 802 is already closed, the molding material does not flow rearward from the inside of the cavity space 801

The reference timing may include the operation timing of the peripheral unit 20 of the injection molding machine 10 during the acquisition (for example, during one molding cycle) of the time-dependent change data. The peripheral unit 20 transmits the operation timing to the control unit 700. In the data storage unit 711, the time-dependent change data is stored in association with the operation timing of the peripheral unit 20 during the acquisition of the time-dependent change data. The detection value can be extracted from the time-dependent change data based on the operation timing of the peripheral unit 20 and by analyzing the extracted detection value, the analyzed detection value can be useful for changing setting of the peripheral unit 20.

For example, an example of the peripheral unit 20 includes a mold temperature controller which regulates the temperature of the mold unit 800. The mold temperature controller regulates a temperature control medium such as water to a preset temperature and supplies the temperature control medium to the flow path of the mold unit 800. The temperature control medium regulates the temperature of the mold unit 800 while flowing through the flow path of the mold unit 800, and thereafter, is discharged to the outside of the mold unit 800.

The mold temperature controller changes the set temperature of the temperature control medium between a first temperature and a second temperature lower than the first temperature during one shot. For example, the mold temperature controller decreases the set temperature of the temperature control medium from the first temperature to the second temperature when the cooling process starts. As a result, the detection value of the temperature of the mold unit 800 gradually decreases from the first temperature to the second temperature. A process in which the detection value of the temperature of the mold unit 800 gradually decreases from the first temperature to the second temperature is referred to as an external cooling process.

A mold temperature detector detects the temperature of the mold unit 800 and transmits a start timing and an end timing of the external cooling process to the control unit 700 as the operation timing of the peripheral unit 20. In the data storage unit 711, the time-dependent change data is stored in association with the start timing and the end timing of the external cooling process during the acquisition of the time-dependent change data. The detection value can be extracted from the time-dependent change data based on the start timing or the end timing of the external cooling process, and by analyzing the extracted detection value, the analyzed detection value can be useful for changing setting of the external cooling process.

The mold temperature controller increases the set temperature of the temperature control medium from the second temperature to the first temperature after the cooling process end and before the filling process starts. As a result, the detection value of the temperature of the mold unit 800 gradually increases from the second temperature to the first temperature. A process in which the temperature of the mold unit 800 gradually increases from the second temperature to the first temperature is referred to as an external heating process.

The mold temperature detector detects the temperature of the mold unit 800 and transmits the start timing and the end timing of the external heating process to the control unit 700 as the operation timing of the peripheral unit 20. In the data storage unit 711, the time-dependent change data is stored in association with a start timing and an end timing of the external heating process during acquisition of the time-dependent change data. The detection value can be extracted from the time-dependent change data based on the start timing or the end timing of the external heating process, and by analyzing the extracted detection value, the analyzed detection value can be useful for setting change of the external heating process.

The reference timing may include an abnormality occurrence timing of the injection molding machine 10 during the acquisition (for example, during one molding cycle) of the time-dependent change data. The abnormality occurrence timing is a timing when an abnormality such as overload of a motor occurs. The presence or absence of the abnormality is determined based on the detection value of the detector in the injection molding machine 10. If the abnormality occurs in the injection molding machine 10, the operation of the injection molding machine 10 is stopped and the molding machine process is interrupted. Accordingly, the abnormality occurrence timing when the abnormality occurs in the injection molding machine 10 can also be handled as one of the operation timings of the injection molding machine 10. In the data storage unit 711, the time-dependent change data is stored in association with the abnormality occurrence timing of the injection molding machine 10 during the acquisition of the time-dependent change data. The detection value can be extracted from the time-dependent change data based on the abnormality occurrence timing of the injection molding machine 10, and by analyzing the extracted detection value, it is possible to estimate a cause of the abnormality of the injection molding machine 10.

As shown in Fig. 3, the control unit 700 includes a detection value extraction unit 712 which compares the extraction timing and the reference timing which are input to the input unit 60 with each other and extracts the detection value detected at the extraction timing input to the input unit 60 from the time-dependent change data stored in the data storage unit 711. The time-dependent change data is stored in association with the reference timing, and thus, a detection timing of the actual data used for the quality management of the molding product can be changed after the molding product is molded.

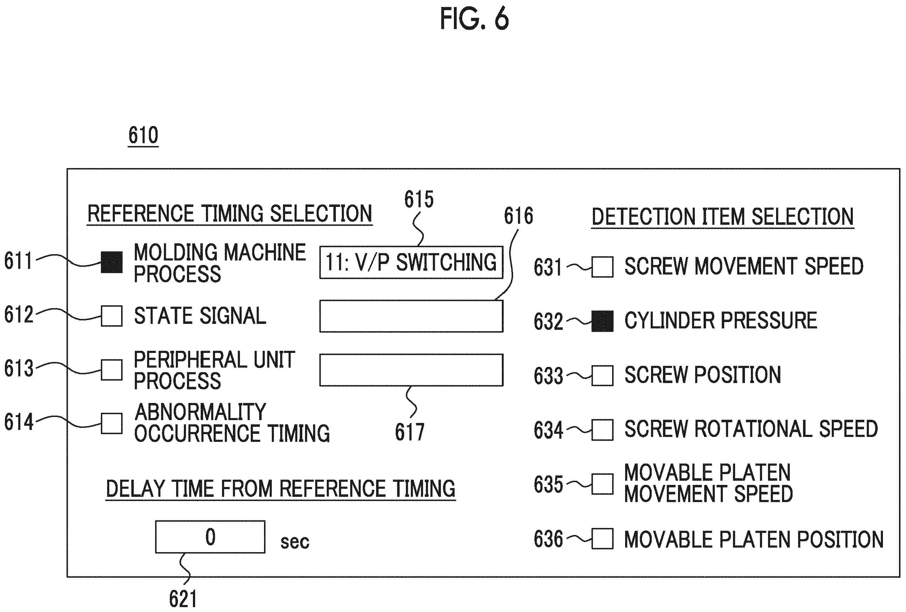

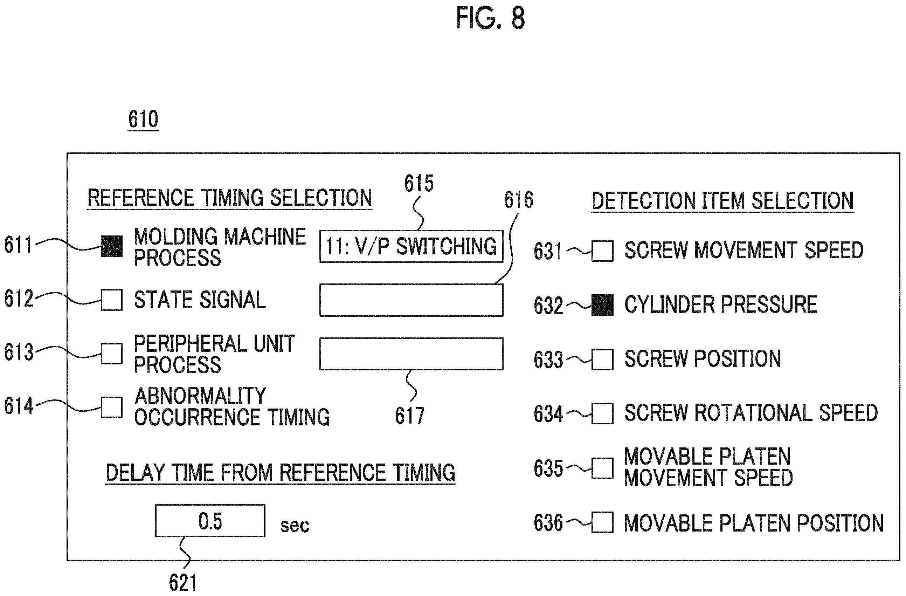

For example, the input unit 60 includes an operation unit 601 which receives a user's input operation and transmits a signal corresponding to the input operation to a host computer 50, and the display unit 602 which displays an input screen 610 (refer to Figs. 6 and 8) corresponding to an input operation in the operation unit 601 under the control of the host computer 50. The extraction timing at which the detection value is extracted by the detection value extraction unit 712 is input to the input screen 610 and an input result is displayed on the input screen 610.

For example, the operation unit 601 and the display unit 602 may be configured of a touch panel so as to be integrated with each other. Moreover, in the present embodiment, the operation unit 601 and the display unit 602 are integrated with each other. However, the operation unit 601 and the display unit 602 may be provided independently from each other. In addition, a plurality of the operation units 601 may be provided.

The input unit 60 transmits the extraction timing input to the input unit 60 to the host computer 50. The host computer 50 is configured of a computer like the control unit 700.

As shown in Figs. 1 and 2, the host computer 50 includes a CPU 501, a recording medium 502, an input interface 503, and an output interface 504. The host computer 50 performs various controls by causing the CPU 501 to execute a program stored in the recording medium 502. In addition, the host computer 50 receives a signal from the outside through the input interface 503 and transmits the signal to the outside through the output interface 504.

The host computer 50 is communicably connected to the control unit 700 via a network 90 such as a Local Area Network (LAN) or an internet line. The connection may be either a wired connection or a wireless connection.

As shown in Fig. 3, the host computer 50 has an input data transmission unit 511 which transmits the extraction timing input to the input unit 60 to the control unit 700. Meanwhile, the control unit 700 has an input data receiving unit 713 that receives the extraction timing transmitted by the input data transmission unit 511. As a result, the control unit 700 can acquire the extraction timing input to the input unit 60.

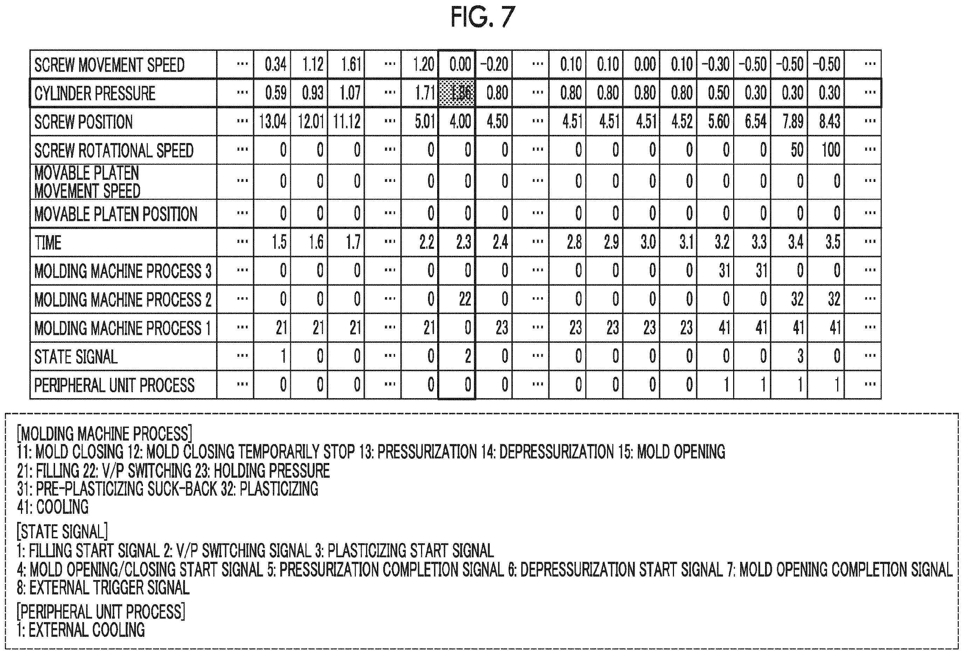

Fig. 6 is a diagram showing a first example of the input screen displayed on the input unit in the injection molding machine according to the embodiment. Fig. 7 is a table showing an extraction timing, a detection item to which the extraction timing is set, and a relationship between time-dependent change data of the detection item and the reference timing, which are respectively input to the input screen of Fig. 6. In Fig. 7, a detection value of an area indicated by a speckle pattern is extracted by the detection value extraction unit 712.

As shown in Fig. 6, the input screen 610 includes reference timing selection input fields 611 to 617 to which the reference timing is selected and input, and a delay time input field 621 to which a delay time is input from the reference timing input to the reference timing selection input fields 611 to 617. Moreover, the input screen 610 includes detection item selection input fields 631 to 636 to which the detection items are selected and input.

The reference timing selection input field 611 to 614 are input fields to which any one of the molding machine process, the state signal, a peripheral unit process, and the abnormality occurrence timing is selected and input. In the input screen 610 of Fig. 6, the molding machine process is selected, and the selection result is displayed.

The reference timing selection input field 615 is an input field to which any one of a plurality of candidates which can be selected as the molding machine process is input. In the input screen 610 of Fig. 6, the V/P switching is input as the molding machine process, and the input result (V/P switching and ID number) is displayed.

The reference timing selection input field 616 is an input field to which any one of a plurality of candidates which can be selected as the state signal is input. Moreover, in the input screen 610 of Fig. 6, as described above, the state signal is not selected and the molding machine process is selected.

The reference timing selection input field 617 is an input field where any one of a plurality of candidates which can be selected as the peripheral unit process is input. Moreover, in the input screen 610 of Fig. 6, as described above, the peripheral unit process is not selected and the molding machine process is selected.

The delay time input field 621 is an input field to which the delay time from the reference timing input to the reference timing selection input fields 611 to 617 is input. In the input screen 610 of Fig. 6, 0 (zero) seconds are input to the delay time input field 621, and the result is displayed.

The detection item selection input fields 631 to 636 are input fields to which any one of the screw position, the screw movement speed, the screw rotational speed, the cylinder pressure, the movable platen position, and the movable platen movement speed is selected and input. In the input screen 610 of Fig. 6, the cylinder pressure is selected, and the selection result is displayed.

The detection value extraction unit 712 compares the extraction timing input to the input screen 610 with the reference timing input to the input screen 610. The extraction timing is a timing which is delayed by the delay time input to the delay time input field 621 based on the reference timing input to the reference timing selection input fields 611 to 617.

In the input screen 610 shown in Fig. 6, as described above, the V/P switching is input as the reference timing, and 0 (zero) seconds are input as the delay time. Therefore, the V/P switching is selected as the extraction timing. Moreover, in the input screen 610 shown in Fig. 6, as described above, the cylinder pressure is input as a detection item. In this case, as shown in Fig. 7, the detection value extraction unit 712 extracts the detection value of the cylinder pressure at the time of the V/P switching.

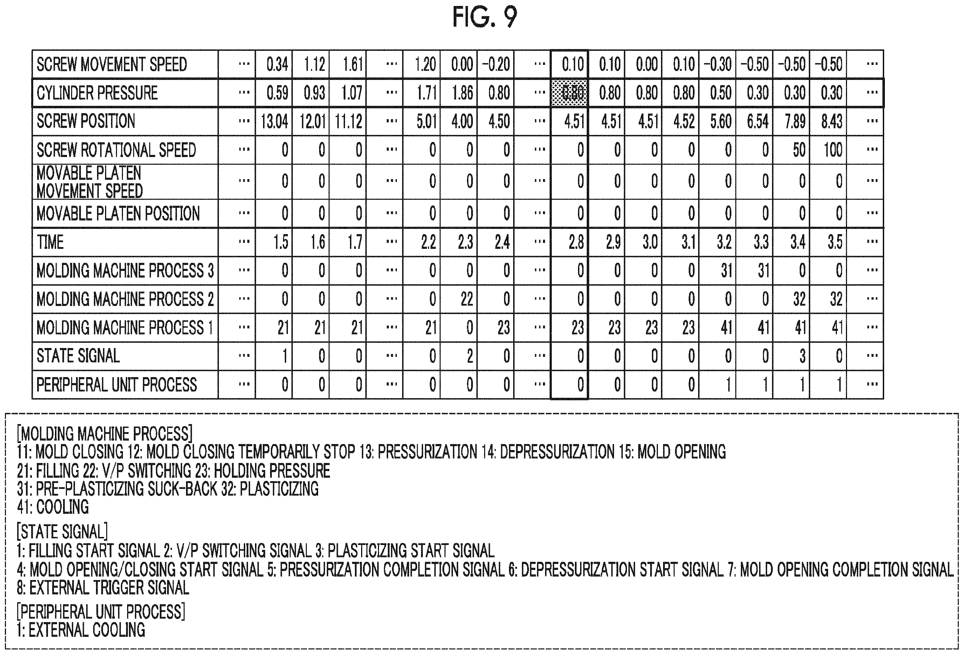

Fig. 8 is a diagram showing a second example of the input screen displayed on the input unit in the injection molding machine according to the embodiment. Fig. 9 is a table showing an extraction timing, a detection item to which the extraction timing is set, and a relationship between time-dependent change data of the detection item and the reference timing, which are respectively input to the input screen of Fig. 8. In Fig. 9, a detection value of an area indicated by a speckle pattern is extracted by the detection value extraction unit 712. Hereinafter, differences between the first example shown in Figs . 6 and 7 and the second example shown in Figs. 8 and 9 will mainly be described.

In the input screen 610 shown in Fig. 8, the V/P switching is input as the reference timing, and 0.5 seconds are input as the delay time. Therefore, 0.5 seconds after the V/P switching are selected as the extraction timing. Moreover, in the input screen 610 shown in Fig. 6, as described above, the cylinder pressure is input as the detection item. In this case, as shown in Fig. 9, the detection value extraction unit 712 extracts the detection value of the cylinder pressure after 0.5 seconds from the V/P switching.

Moreover, a plurality of the input screens 610 may be prepared such that a plurality of extraction timings can be input to the input unit 60 or a plurality of detection items can be input to the input unit 60. The plurality of input screens 610 may be simultaneously displayed on the display unit 602 or may be switched and displayed.

As shown in Fig. 3, the control unit 700 includes an extraction data transmission unit 714 which transmits the detection value extracted by the detection value extraction unit 712 to the host computer 50. Meanwhile, the host computer 50 has an extraction data receiving unit 512 which receives the detection value transmitted by the extraction data transmitting unit 714.

Moreover, in the above embodiment, the data storage unit 711 and the detection value extraction unit 712 are provided in the control unit 700 mounted on the injection molding machine 10. However, the data storage unit 711 and the detection value extraction unit 712 may be provided in the host computer 50. In the latter case, the control unit 700 includes a data transmission unit which transmits the time-dependent change data to the host computer 50. Meanwhile, the host computer 50 has a data receiving unit which receives data transmitted by the data transmission unit.

In a case where the data storage unit 711 and the detection value extraction unit 712 are provided in the host computer 50, after the control unit 700 transmits the time-dependent change data to the host computer 50, it is possible to erase the transmitted time-dependent change data from the control unit 700. Therefore, a storage capacity of the control unit 700 can be reduced. Moreover, in the case where the data storage unit 711 and the detection value extraction unit 712 are provided in the control unit 700, since the control unit 700 may not transmit the time-dependent change data to the host computer 50, an amount of communication data between the control unit 700 and the host computer 50 can be reduced.

In the case where the data storage unit 711 and the detection value extraction unit 712 are provided in the host computer 50, the input data input to the input unit 60 or the extraction data extracted by the detection value extraction unit 712 may not be transmitted and received between the host computer 50 and the control unit 700. Therefore, the input data transmission unit 511, the input data receiving unit 713, the extraction data transmission unit 714, and the extraction data receiving unit 512 are unnecessary.

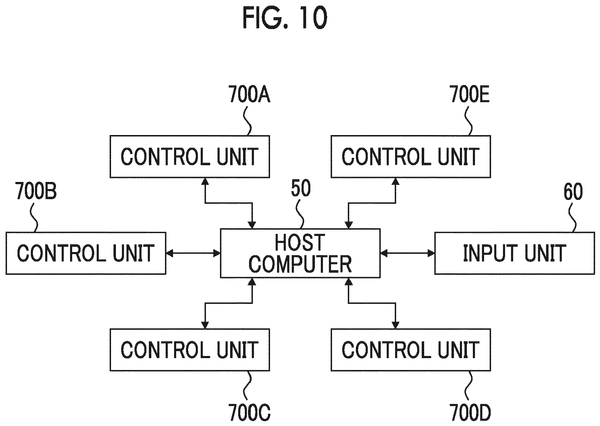

Fig. 10 is a diagram showing a relationship between a host computer and a control unit mounted on each of a plurality of injection molding machines in the injection molding machine according to the embodiment. As shown in Fig. 10, the host computer 50 is communicably connected to each of a plurality of control units 700A to 700E mounted in different injection molding machines 10, and performs data communication with each of the plurality of control units 700A to 700E.

Makers of manufacturing the plurality of control units 700A to 700E are different from each other, and thus, timings when the detection values recorded as the actual data are detected may be different from each other. In this case, the host computer 50 can acquire the actual data of the same detection timing from the plurality of control units 700A to 700E by transmitting the extraction timing to at least one of the plurality of control units 700A to 700E.

In addition, in the present embodiment, the host computer 50 transmits the extraction timing to at least one of the plurality of control units 700A to 700E. However, the present invention is not limited thereto. For example, the input unit 60 may transmit the extraction timing input to the input unit 60 to at least one of the plurality of control units 700A to 700E without going through the host computer 50. The input unit 60 may be a portion of an injection molding machine or may be configured of the operation unit 750 and the display unit 760. In any case, the host computer 50 can acquire the actual data of the same detection timing from the plurality of control units 700A to 700E.

Hereinbefore, the embodiments or the like of the injection molding data management device and the injection molding machine are described. However, the present invention is not limited to the above-described embodiments or the like, and various modifications and improvements are possible within the scope of the present invention described in the claims.

For example, in the embodiment, the input screen 610 includes the delay time input field 621. However, the input screen 610 may include a retroactive time input field instead of (or in addition to) the delay time input field 621. The retroactive time input field is an input field to which a retroactive time dating back from the reference timing selected in the reference timing selection input fields 611 to 617 is input. In this case, the extraction timing is earlier than the reference timing input to the reference timing selection input fields 611 to 617 by the retroactive time input to a retroactive time input field.

### Brief Description of the Reference Symbols

10: injection molding machine
20: peripheral unit
50: host computer
60: input unit
161: mold clamping motor encoder (movable platen position detector, movable platen movement speed detector)
341: plasticizing motor encoder (screw rotational speed detector)
351: injection motor encoder (screw position detector, screw movement speed detector)
360: pressure detector
700: control unit (injection molding data management device)
711: data storage unit
712: detection value extraction unit

## Claims

1. An injection molding data management device (700) comprising:
a data storage unit (711) configured to store data indicating a time-dependent change of a detection value detected by a detector in an injection molding machine (10); and
a detection value extraction unit (712) configured to extract a detection value from the data stored in the data storage unit (711),
**characterized in that**
the data is stored in association with a reference timing for determining an extraction timing at which the detection value is extracted from the data,
the detection value extraction unit (712) is configured to compare the extraction timing which is input to an input unit (60) and the reference timing with each other, and
the detection value is detected at the extraction timing input to the input unit (60).

2. The injection molding data management device (700) according to claim 1,
wherein the reference timing includes an operation timing of the injection molding machine (10), and
wherein the data is stored in the data storage unit in association with the operation timing of the injection molding machine (10).

3. The injection molding data management device (700) according to claim 1 or 2,
wherein the reference timing includes an operation timing of a peripheral unit (20) of the injection molding machine (10), and
wherein the data is stored in the data storage unit in association with the operation timing of the peripheral unit (20) .

4. The injection molding data management device according to any one of claims 1 to 3,
wherein the reference timing includes an abnormality occurrence timing of the injection molding machine (10), and
wherein the data is stored in the data storage unit (711) in association with the abnormality occurrence timing of the injection molding machine (10).

5. The injection molding data management device (700) according to any one of claims 1 to 4,
wherein the detection value extraction unit (712) is configured to extract a detection value, which is detected at the extraction timing delayed by a delay time input to the input unit based on the reference timing input to the input unit, from the data stored in the data storage unit (711).

6. An injection molding machine (10) comprising:
the injection molding data management device (700) according to any one of claims 1 to 5.

## Patentansprüche

1. Spritzgießdatenverwaltungsvorrichtung (700), umfassend:
eine Datenspeichereinheit (711), die ausgelegt ist, um Daten zu speichern, die eine zeitabhängige Änderung eines Detektionswerts anzeigen, welcher von einem Detektor in einer Spritzgießmaschine (10) detektiert wird; und
eine Detektionswertextraktionseinheit (712), die dazu ausgelegt ist, um einen Detektionswert aus den in der Datenspeichereinheit (711) gespeicherten Daten zu extrahieren,
**dadurch gekennzeichnet, dass**
die Daten in Verbindung mit einem Referenztiming gespeichert werden, um ein Extraktionstiming zu bestimmen, bei dem der Detektionswert aus den Daten extrahiert wird,
die Detektionswertextraktionseinheit (712) dazu ausgelegt ist, das Extraktionstiming, das in eine Eingabeeinheit (60) eingegeben wird, und das Referenztiming miteinander zu vergleichen, und
der Detektionswert bei der Extraktionstimingeingabe, welcher in die Eingabeeinheit (60) eingegeben wird, detektiert wird.

2. Spritzgießdatenverwaltungsvorrichtung (700) nach Anspruch 1,
wobei das Referenztiming ein Betriebstiming der Spritzgießmaschine (10) umfasst, und
wobei die Daten in der Datenspeichereinheit in Verbindung mit dem Betriebstiming der Spritzgießmaschine (10) gespeichert werden.

3. Spritzgießdatenverwaltungsvorrichtung (700) nach Anspruch 1 oder 2,
wobei das Referenztiming ein Betriebstiming einer peripheren Einheit (20) der Spritzgießmaschine (10) umfasst, und
wobei die Daten in der Datenspeichereinheit in Verbindung mit dem Betriebstiming der peripheren Einheit (20) gespeichert werden.

4. Spritzgießdatenverwaltungsvorrichtung nach einem der Ansprüche 1 bis 3,
wobei das Referenztiming ein Timing des Auftretens einer Abnormalität der Spritzgießmaschine (10) umfasst, und
wobei die Daten in der Datenspeichereinheit (711) in Verbindung mit dem Timing des Auftretens einer Abnormalität der Spritzgießmaschine (10) gespeichert werden.

5. Spritzgießdatenverwaltungsvorrichtung (700) nach einem der Ansprüche 1 bis 4,
wobei die Detektionswertextraktionseinheit (712) ausgelegt ist, um einen Detektionswert aus den in der Datenspeichereinheit (711) gespeicherten Daten zu extrahieren, der bei dem Extraktionstiming detektiert wird, verzögert durch eine Verzögerungszeit, welche in die Eingabeeinheit eingegeben wird auf der Basis des Referenztimings, das in die Eingabeeinheit eingegeben wird.

6. Spritzgießmaschine (10), umfassend:
Spritzgießdatenverwaltungsvorrichtung (700) nach einem der Ansprüche 1 bis 5.

## Revendications

1. Un dispositif de gestion de données de moulage par injection (700) comprenant :
une unité de stockage de données (711) configurée de manière à stocker des données indiquant un changement « en fonction du temps » d'une valeur de détection détectée par un détecteur dans une machine de moulage par injection (10); et
une unité d'extraction de valeur de détection (712) configurée de manière à extraire une valeur de détection des données stockées dans l'unité de stockage de données (711) ;
**caractérisé en ce que** :
les données sont stockées en association avec une temporisation de référence pour déterminer une temporisation d'extraction à laquelle la valeur de détection est extraite des données ;
l'unité d'extraction de valeur de détection (712) est configurée pour comparer mutuellement la temporisation d'extraction qui est appliquée en entrée à une unité d'entrée (60) et la temporisation de référence ; et
la valeur de détection est détectée à la temporisation d'extraction appliquée en entrée à l'unité d'entrée (60).

2. Le dispositif de gestion de données de moulage par injection (700) selon la revendication 1,
dans lequel la temporisation de référence inclut une temporisation de fonctionnement de la machine de moulage par injection (10) ; et
dans lequel les données sont stockées dans l'unité de stockage de données en association avec la temporisation de fonctionnement de la machine de moulage par injection (10).

3. Le dispositif de gestion de données de moulage par injection (700) selon la revendication 1 ou 2,
dans lequel la temporisation de référence inclut une temporisation de fonctionnement d'une unité périphérique (20) de la machine de moulage par injection (10) ; et
dans lequel les données sont stockées dans l'unité de stockage de données en association avec la temporisation de fonctionnement de l'unité périphérique (20).

4. Le dispositif de gestion de données de moulage par injection selon l'une quelconque des revendications 1 à 3,
dans lequel la temporisation de référence inclut une temporisation d'occurrence d'anomalie de la machine de moulage par injection (10) ; et
dans lequel les données sont stockées dans l'unité de stockage de données (711) en association avec la temporisation d'occurrence d'anomalie de la machine de moulage par injection (10).

5. Le dispositif de gestion de données de moulage par injection (700) selon l'une quelconque des revendications 1 à 4,
dans lequel l'unité d'extraction de valeur de détection (712) est configurée pour extraire une valeur de détection, qui est détectée à la temporisation d'extraction retardée par un temps de retard appliqué en entrée à l'unité d'entrée sur la base de la temporisation de référence appliquée en entrée à l'unité d'entrée, à partir des données stockées dans l'unité de stockage de données (711).

6. Une machine de moulage par injection (10) comprenant :
le dispositif de gestion de données de moulage par injection (700) selon l'une quelconque des revendications 1 à 5.
